# EUROPEAN PATENT APPLICATION

(11) **EP 3 064 626 A1**
(43) Date of publication of application: **07.09.2016**
(21) Application number: 16158381.0
(22) Date of filing: 03.03.2016
(51) Int. Cl.: D04H 1/02, D04H 1/4209, D04H 1/4226, E04B 1/76

(54) **METHOD AND ARRANGEMENT FOR PRODUCING LOOSE-FILL INSULATION PRODUCT AND LOOSE-FILL INSULATION PRODUCT**

(30) Priority: 03.03.2015 FI 20155141
(71) Applicant: Paroc Group Oy, 00181 Helsinki (FI)
(72) Inventor: FAGERLUND, Johanna, 20720 Turku (FI); JOHANSSON, Patrick, 21600 Pargas (FI); LINDGREN, Tommy, 20540 Turku (FI); FAGERLUND, Susanne, 20500 Turku (FI)
(74) Representative: Turun Patenttitoimisto Oy

(57) **Abstract**

The invention relates to a method and arrangement for producing loose-fill insulation product. The method comprises melting of inorganic raw-materials in a melting furnace and production of mineral fibres from the molten raw-materials. The mineral fibres are collected as a web, and the web is transported with transport means to a compression unit. The compressed loose-fill insulation product is the packed. The process is free from a curing step and the amount of binder which is fed onto the fibres during the production is < 0.5 weight-%. The invention relates also to a loose-fill insulation product produced with the method.

## Description

The present invention relates to a method and arrangement for producing loose-fill insulation product as well as to loose-fill insulation product according to the preambles of the enclosed independent claims.

Use of loose-fill insulation has increased in popularity because it is easy to add to existing finished areas, irregularly shaped areas and around obstructions. Loose-fill insulation products are not in form of batts or blankets, but they comprise relatively short loose mineral fibres or small tufts of mineral fibres, which are blown into place by using a special apparatus, such as pneumatic blower. Loose-fill insulation products are used, for example, for insulation of unfinished attic floors, open new wall cavities or enclosed existing wall cavities. Loose-fill insulation products are quick to install, which also increases their popularity.

Loose-fill insulation products are low cost products. Nowadays loose-fill insulation products are produced in similar manner than other mineral fibre products by producing mineral fibres with binder, collecting the fibres and forming a web which is compressed and cured in a curing oven. After curing the web is shredded in order to obtain a product that is suitable for use as loose-fill insulation. There is a constant pressure to reduce the production costs of loose-fill insulation products and to increase the production efficiency.

An object of this invention is to minimise or possibly even eliminate the disadvantages existing in the prior art.

Another object of the present invention is to provide a cost-effective alternative for producing loose-fill insulation product.

Yet another object of the present invention is to produce a loose-fill insulation product with maximal amount of inorganic content.

These objects are attained with the invention having the characteristics presented below in the characterising parts of the independent claims.

Some preferred embodiments of the invention are presented in the dependent claims.

Typical method according to the present invention for producing loose-fill insulation product, comprises
- melting inorganic raw-materials in a melting furnace,
- producing mineral fibres from the molten raw-materials,
- collecting the mineral fibres as a web,
- transporting the web with transport means to a compression unit,
- packing the compressed loose-fill insulation product,
whereby the process is free from a curing step and the amount of binder which is fed onto the fibres during the production is < 0.5 weight-%.

Typical loose-fill insulation product according to the present invention comprises mineral fibres having a mean fibre length in the range of 1.0 - 4.0 mm, typically 1.2 - 3.0 mm, and < 0.5 weight-% of binder.

Typical arrangement according to the present invention for producing loose-fill insulation product comprises
- a fiberizing means for production of mineral fibres,
- a collector arranged to collect the produced mineral fibres as a primary web,
- a compression unit,
- transport means for transporting the web to the compression unit,
- packaging means for packing of the compressed product,
whereby the arrangement is free from curing oven.

Now it has been surprisingly found that acceptable loose-fill insulation product can be obtained even if the amount of binder which is fed onto the mineral fibres is minimised, or even totally eliminated, and there no curing step in production process. Previously it has been assumed that the collected primary web is too weak without binder, which leads to problems in web handling and in succeeding process steps.

In the present context of the term "mineral fibre" denotes inorganic fibres, which are produced by melting and fiberising inorganic raw materials, such as stone, slag and/or glass. Preferably the mineral fibres are produced by melting stone and/or slag. The mineral fibres may have the following chemical composition, where the proportions of the main components are given in weight-%:
SiO₂ 30 - 73, preferably 35 - 50, more preferably 35 - 45;
TiO₂ 0 - 8, preferably 0 - 5, more preferably 0.1 - 3;
Al₂O₃ 0 - 25, preferably 13 - 20, more preferably 15 - 20;
Fe₂O₃ 0 - 17, preferably 3 - 15, more preferably 5 - 11;
MgO+CaO 0 - 40, preferably 15 - 35, more preferably 22 - 35;
Na₂O+ K₂O 0 - 18, preferably 0 - 10, more preferably 0.4 - 4;
P₂O₅ 0 - 6, preferably 0 - 5, more preferably 0.1 - 3.

In addition to the main components, the mineral fibres may comprise small amounts of other components, such as MnO, SO₃, Cr₂O₃, B₂O₃, ZrO₂. The proportion of these components, individually, is typically less than 3 weight-%

The used binder may be organic or inorganic, preferably organic binder. According to one embodiment the binder, such as phenol formaldehyde, silicon, heavy oil, is fed onto the fibres in amount, which is < 0.2 weight-%, preferably < 0.15 weight-%, more preferably < 0.1 weight-%. According to one preferable embodiment no binder is fed onto the fibres during the production, which means that the method and the obtained loose-fill insulation product are essentially free from binder. The minimised amount of binder provides also that the amount of organic components in the loose-fill insulation product is minimised, even totally eliminated. This may improve the fire resistance of the product. Furthermore, some customers may be suspicious of organic components because they are conceived as "unnatural".

According to one embodiment at least one dust binding agent is fed onto the fibres during the production. The dust binding agent may be water, mineral oil, oils originating from plants and/or vegetables, a silicone containing liquid or a mixture thereof. The dust binding agent(s) can be sprayed or otherwise applied on the mineral fibres during the formation and/or collection of the fibres, preferably during the formation of the fibres. Dust binding agent(s) is/are fed, e.g. by spraying or otherwise applying, onto the fibres during their production in such amount that the obtained loose-fill insulation product thus comprises < 1 weight-% of dust binding agent(s), preferably 0.01 - 0.6 weight-%, more preferably 0.01 - 0.2 weight-%, even more preferably 0.01 - 0.1 weight-%, of dust binding agent. It is speculated that the dust binding agent not only reduces the dust formation in the process, but it may also have a positive effect on coherence of the formed web.

According to one embodiment of the invention it is also possible to feed one or several hydrophobisation agents to the mineral fibres during the production of the loose-fill insulation product. Hydrophobisation agent(s) may be fed in addition to binder and/or dust binding agent(s) or hydrophobisation agent(s) may be sole additive, which is fed to the fibres during the production process. Hydrophobisation agent may be selected from AKD wax, mineral oils, oils originating from plants and/or vegetables, a silicone containing liquids and from any mixtures thereof. According to one preferable embodiment of the invention the hydrophobisation agent is AKD wax. Hydrophobisation agent(s) is/are fed, e.g. by spraying or otherwise applying on the fibres during their production in such amount that the obtained loose-fill insulation product thus comprises < 1 weight-% of hydrophobisation agent(s), preferably 0.01 - 0.6 weight-%, more preferably 0.01 - 0.2 weight-%, even more preferably 0.01 - 0.1 weight-%, of hydrophobisation agent.

The process according to the present invention is free from curing step. In the present context of the term "curing step" is understood as a separate process step, where the web is transported into and through a curing oven, where the temperature is at least 100 °C. Normally the web is fed into the curing oven from its first end and out of the oven from its second end, and the duration time between the first and second end is at least 1 min. The temperature in the curing oven is constant or substantially constant between the first end and second end of the oven. The present invention is free from such curing step. This means that the mineral fibres or the collected fibre web is not subjected to curing at a temperature > 80 °C, preferably > 100 °C, where the duration in the said temperature is at least 1 min, typically at least 3 min. Consequently, the arrangement is free from curing oven.

Mineral fibres for the loose-fill insulation product are preferably produced by melting suitable mineral-containing raw materials, such as diabase, limestone or slag in a melting furnace. The obtained melt is led to a fiberising means, where it is formed into mineral fibres. According to one preferred embodiment of the invention the fiberizing means may be a cascade-type fiberiser. The cascade-type fiberiser comprises four fiberising rotors which rotate around a horizontal or nearly horizontal axis. The axes of the fiberising rotors are typically arranged on different heights. Melt is fed to the mantle surface of the first fiberising rotor, where a part of it adheres. Other part of the melt is thrown towards the mantle surface of the second fiberising rotor. Again a part of the melt gets a hold of the mantle surface and the rest of the melt is thrown towards the mantle surface of the third rotor. A part of the melt again adheres to the third mantle surface and the rest is thrown to the fourth mantle surface, of which preferably the entire remaining melt mass gets a hold. The melt, which has got a hold of respective rotors' mantle surface, is by means of centrifugal force formed into fibres, which detach from the melt rings on the fiberising rotors.

Alternatively, mineral fibres may also be manufactured by feeding mineral or glass melt into a fiberising means, which is a rotating cup-like centrifuge. On the outer circumference of the centrifuge cup have been arranged holes through which mineral melt is thrown, forming at the same time mineral fibres.

According to the invention the produced mineral fibres are collected as a primary web on to a surface of a collector. The mineral fibres are transported from the fiberising apparatus through a collecting chamber towards a collector, which is arranged in front of the fiberising means. Mineral fibres may be collected onto a moving collector, such as a belt conveyor or a rotating drum. The primary web may be collected with the aid of underpressure on a travelling perforated collecting surface of the collector. The obtained primary fibre web is continuous and has edges which define a first longitudinal direction, which is unidirectional, i.e. parallel, with the edges. The primary fibre web mainly comprises fibres arranged in this first longitudinal direction

According to one embodiment of the present invention the primary web is transported directly to the compression unit by transport means. For example, the primary web may be captured by suction means, such as suction tube, transferred to the transport means and transported to the compression unit.

According to another embodiment of the invention the primary web may be cross-lapped before it is transported to the compression unit. The cross-lapping of the primary fibre web may be performed normally by using cross-lapping means, such as for example a pendulum conveyor, which may comprise for example two vertical conveyor elements placed against each other, between which the primary fibre web is guided. The upper end of the pendulum conveyor is attached to a supporting point and its lower part is allowed to perform a pendulum motion in the lateral direction of a receiving conveyor. The primary web is discharged from the lower part of the pendulum conveyor, from the space between the conveyor elements placed against each other to the moving transport unit, such as receiving conveyor, where it is arranged into partially overlapping layers. The primary web forms a fold at the edges of the transport unit, where the pendulum conveyor changes its direction of motion during the folding process.

The non-cross-lapped or cross-lapped primary web is transported web to a compression unit by transport means. Transport means may comprise at least one normal transport conveyor or the like. According to one preferable embodiment of the invention the transport means comprises a screw conveyor or the like. The screw conveyor transports the web and at the same time opens up and/or disrupts the web structure, so that it becomes optimal for use as loose-fill insulation.

The mineral fibre web may be dried before the compression step, especially when binder, dust binding agent(s) and/or hydrophobisation agent(s) have been sprayed or applied onto the fibres during the preceding production steps. According to one preferable embodiment of the invention the drying of the web is performed by feeding hot gas to the transport means, especially to the screw conveyor, and bringing the web into a contact with the hot gas. Preferably the hot gas is fed to the transport means, such as screw conveyor, countercurrently. This means that the hot gas is led into the housing surrounding the transport means, e.g. housing of the screw conveyor, from its second end, where the mineral fibres exit the transport means and led out from the first end of the transport means, where the fibre web enters the transport means. This means that the drying is performed under a temperature gradient, because the temperature of the gas decreases during its travel from the second end to the first end of the transport means. The temperature of the hot gas, which is used for drying, may be in the range of 120 - 275 °C, preferably 160 - 250 °C, at the entry to the transport means. According to one preferred embodiment the flue gases from the melting furnace, such as cupola furnace, where the fibre raw materials are melted, are used as hot gas for drying the mineral fibre web before the compression step. The use of flue gases from the cupola furnace provides the advantage that no separate flue gas cooling system is needed or at least the capacity of the cooling system can be reduced. In this manner further process savings are produced.

Preferably the drying and the disruption of the mineral web structure are performed simultaneously by using a screw conveyor as a part of the transport means between the web formation and the compression step.

According to one embodiment of the invention the non-cross-lapped or cross-lapped web may be shredded before the compression unit. Shredding may be performed to guarantee the disruption of the web structure and release of the individual fibres and/or fibre tufts. According to one preferred embodiment of the present invention the web is shredded during the transport to the compression unit. For example, if the transport means for transporting the web from cross-lapping means comprises a screw conveyor as described above, the structure of the web is disrupted during the travel from the cross-lapping means to the compression unit and individual fibres and/or fibre tufts are released. Alternatively, the arrangement may comprise a separate shredding unit arranged after the cross-lapping means and before the compression unit.

Transport means transport the web or shredded web to a compression unit, which may be compression container, big pack compression arrangement or the like. suitable compression units are known as such, and readily available for a person skilled in the art. In the compression unit the web or the shredded web is compressed so that its volume reduced. If the web has not been subjected to any shredding or structural disruption before the compression step, at the latest in the compression step the structure of the web is disordered. Because the web comprises a minimal amount of binder, or no binder, a mere compression may provide the release of the individual separate fibres and/or fibre tufts. The compressed product is packed into bales or packs of desired size or by the packaging means. After this the produced loose-fill insulation product is ready for transport to the end user.

According to one embodiment of the invention the mineral fibres may have a mean fibre length in the range of 1 - 4 mm, preferably 1.2 - 3 mm. The mean fibre length can be measured as follows. A fibre sample is taken from fibre material from which the possible binder has been removed. The sample is carefully taken with a pair of tweezers, in order to avoid breaking the individual fibres, and the sample is placed in a glass container with approx. 300 ml of glycerine. The fibres are separated from each other by careful stirring with a glass rod. The glycerine/fibre mixture is poured into a small number of, e.g. 5 to 10, Petri dishes with a diameter of approx. 50 mm. The fibres are allowed to sediment to the bottom before the measuring is begun. One Petri dish at a time is projected with a 25 - 50 -fold enlargement onto a white surface or else the image is enlarged and transferred to a computer screen. All the fibres in a Petri dish are measured with an accuracy of 0.1 mm, and the procedure continues with the next dish until at least 300 fibres have been measured. The mean fibre length is the arithmetic mean value of all the measured fibres.

The mean fibre diameter may be in the range of 3.0 - 4.5 µm, typically 3.3 - 4.0 µm, measured by using a microscope with e.g. a 500-fold enlargement. All measurements are performed on the sieved fibre fraction, where the fibre size is <32 µm. The fibre material to be measured is suitably placed between two thin test glasses. The length-based arithmetic mean fibre diameter is used as a reference value for the fibre diameter. A method for obtaining this is to measure the diameter of such fibres that cross one or more drawn lines on a computer screen, which is connected to the microscope, and count the mean diameter of these fibres. Altogether at least 200 fibres are usually measured with an accuracy of 0.1 µm.

According to one embodiment of the invention the loose-fill insulation product has an installed density of 20 - 110 g/m³, preferably 25 - 45 g/m³.

Even if the invention was described with reference to what at present seems to be the most practical and preferred embodiments, it is appreciated that the invention shall not be limited to the embodiments described above, but the invention is intended to cover also different modifications and equivalent technical solutions within the scope of the enclosed claims.

## Claims

1. Method for producing loose-fill insulation product, the method comprising
- melting inorganic raw-materials in a melting furnace,
- producing mineral fibres from the molten raw-materials,
- collecting the mineral fibres as a web,
- transporting the web with transport means to a compression unit,
- packing the compressed loose-fill insulation product,
**characterised in that** the process is free from a curing step and the amount of binder which is fed onto the fibres during the production is < 0.5 weight-%.

2. Method according to claim 1, **characterised in** feeding no binder onto the fibres during the production.

3. Method according to claim 1 or 2, **characterised in** feeding dust binding agent(s) and/or hydrophobisation agent(s) onto the fibres during their production in such amount that the obtained loose-fill insulation product thus comprises < 1 weight-% of dust binding agent(s)/hydrophobisation agent(s).

4. Method according to any of claims 1 - 3, **characterised in that** the transport means comprises a screw conveyor or the like.

5. Method according to any of claims 1 - 4, **characterised in** drying the web before the compression unit by feeding hot gas to the transport means and bringing the web into a contact with the hot gas.

6. Method according to claim 5, **characterised in** using flue gases from the melting furnace, such as cupola furnace, as hot gas for drying of the web.

7. Method according to any of claims 1 - 6, **characterised in** shredding the web before compression unit.

8. Method according to claim 7, **characterised in** shredding the web during the transport to the compression unit.

9. Loose-fill insulation product, produced by the method according any of claims 1 - 8 and comprising
- mineral fibres having a mean fibre length in the range of 1.0 - 4.0 mm, typically 1.2 - 3.0 mm, and
- comprising < 0.5 weight-% of binder.

10. Loose-fill insulation product according to claim 9, **characterised in that** it is essentially free of binder.

11. Loose-fill insulation product according to claim 9 or 10, **characterised in that** it comprises < 1 weight-% of dust binding agent(s) and/or hydrophobisation agent(s).

12. Loose-fill insulation product according to any of claims 9 - 11, **characterised in that** it has an installed density of 20 - 110 g/m³, preferably 25 - 45 g/m³.

13. Arrangement for producing loose-fill insulation product, the arrangement comprising
- a fiberizing means for production of mineral fibres,
- a collector arranged to collect the produced mineral fibres as a primary web,
- a compression unit,
- transport means for transporting the web to the compression unit,
- packaging means for packing of the compressed product,
**characterised in that** the arrangement is free from curing oven.

14. Arrangement according to claim 13, **characterised in that** it comprises a shredding unit arranged before the compression unit.

15. Arrangement according to claim 13 or 14, **characterised in that** the transport means comprises a screw conveyor or the like.
